(19) **Europäisches Patentamt**

**European Patent Office**

**Office européen des brevets**

(11) **EP 1 096 280 A1**

(12) **EUROPEAN PATENT APPLICATION**

(43) Date of publication:
02.05.2001 Bulletin 2001/18

(51) Int. Cl.$^7$: **G02B 6/34**, G02B 6/16

(21) Application number: **00309053.7**

(22) Date of filing: **16.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.10.1999 US 428723**

(71) Applicant:
**LUCENT TECHNOLOGIES INC.**
**Murray Hill, New Jersey 07974-0636 (US)**

(72) Inventors:
• **Cai, Yongming**
**Bridgewater, New Jersey 08807 (US)**
• **Koeppen, Christopher Stephen**
**New Hope, Pennsylvania 18938 (US)**

(74) Representative:
**Watts, Christopher Malcolm Kelway, Dr. et al**
**Lucent Technologies (UK) Ltd,**
**5 Mornington Road**
**Woodford Green Essex IG8 OTU (GB)**

(54) **Multiple grating optical waveguide monitor**

(57) An optical monitoring arrangement (30) utilizes the properties of a blazed Bragg grating to redirect a portion of an optical signal out of the axial path and into a detecting device. A plurality of blazed Bragg gratings (32,34) are utilized, each having unique properties, to increase the robustness of the monitor. In particular, by utilizing a plurality of N gratings, the bandwidth of the monitor may be increased N-fold (assuming no overlap in wavelength between gratings). Alternatively, an improvement in resolution can be obtained by utilizing a narrower bandwidth and measuring N times the number of raw data points within that bandwidth. A combination of increase in bandwidth and resolution may be obtained by a comprise between these two extremes. Chirped blazed gratings may also be employed

**FIG. 3**

**EP 1 096 280 A1**

## Description

### Field Of The Invention

The present invention relates to an optical monitor utilizing waveguide gratings to redirect certain wavelengths to a monitoring device and, more particularly, to using multiple blazed gratings to improve the resolution and performance of the monitoring device.

### Background Of The Invention

In multi-wavelength optical communication systems (usually referred to as "wavelength division multiplexed" or WDM systems), efficient wavelength-selective means for tapping electromagnetic radiation (to be referred to herein as "light", regardless of wavelength) from an optical fiber could be advantageously used in a variety of functions, e.g., as a wavelength monitor, channel monitor, demultiplexer, amplifier monitor, or in a feedback loop with an optical amplifier.

U.S. Patent 5,061, 032 issued to G. Meltz et al. on October , 1991, discloses an optical fiber tap that comprises a blazed, chirped refractive index grating selected to redirect light guided in the fiber such that it comes to a focus at a point outside of the fiber. As used throughout this discussion, the term "blazed" refers to a grating where the plane of the index perturbations (i.e., gratings) is not perpendicular to the propagation direction of the guided mode or modes within the fiber. A grating is "chirped" if the (optical) repeat distance $\Lambda$ between the index perturbations is not constant as a function of the axial coordinate z of the fiber, i.e., if $\Lambda = \Lambda(z)$. An exemplary dispersive optical waveguide tap including a blazed and chirped refractive index grating is disclosed in U.S. Patent 5,832,156 issued to T.A. Strasser et al. on November 3, 1998. In particular, Strasser et al. utilize a coupling means disposed contiguous with the optical fiber in the region of the grating to direct the tapped modes into an associated detector apparatus, such as an array of photodiodes. The blazed grating in the fiber also functions to angularly ($\theta$) disperse the light such that different wavelengths can be imaged by the coupling means onto different detector elements within the array. Consequently, the electrical signals of the detector array map out the spectrum of light associated with the original signal propagating through the fiber.

The optical performance and cost of various prior art optical monitors (as defined by parameters such as bandwidth, resolution and accuracy) are primarily determined by the grating/detector combination utilized. In many newer applications, such as measuring optical signal-to-noise ratios (OSNRs) of tightly-spaced dense WDM ("DWDM") channels (e.g., 50 Ghz and closer spacings), extended dynamic range measurements, simultaneous monitoring of ultrawide (e.g., 60-80nm) or multiple bands (e.g., C and L), as well as simultaneous monitoring of multiple network elements (e.g., amplifier and add/drop nodes), the combined cost/performance of the prior art devices does not meet the desired targets.

Thus, a need remains in the art for an optical waveguide tap that remains cost-effective while able to provide increased bandwidth and/or resolution for new and emerging optical applications.

### Summary Of The Invention

The need remaining in the prior art is addressed by the present invention, which relates to an optical monitor utilizing waveguide gratings to redirect certain wavelengths to a monitoring device and, more particularly, to using multiple blazed gratings to improve the resolution and performance of the monitoring device.

The present invention is embodied in an article comprising two distinct blazed Bragg gratings disposed side-by-side. For light incident from either output of an associated 1x2 optical switch, one or the other blazed Bragg grating serves to tap light out of the fiber and, ultimately, into an associated detector (photodiode array). In the monitoring arrangement of this particular embodiment of the present invention, only one blazed Bragg grating is "active" at a time. That is, light entering an input port of a 1x2 optical switch is directed exclusively to one of the two output ports (and thus into one of the pair of blazed Bragg gratings). In general, each grating may have a separate optical source associated therewith or, in yet another embodiment, a plurality of M optical signals may used, in a predetermined combination, with a plurality of N gratings.

In accordance with the teachings of the present invention, the parameters of the two blazed Bragg gratings can be chosen such that, for example, they tap out light in different wavelength ranges, thus increasing the overall bandwidth of the monitor. Alternatively, an improvement in resolution can be obtained by utilizing a narrower bandwidth and measuring twice the number of raw data points within that bandwidth. A compromised embodiment of the present invention may improve both bandwidth and resolution by applying both techniques (i.e., by increasing, but not doubling, the bandwidth, an increased number of raw data points can still be collected).

In its most general form, the monitor of the present invention may include N such blazed Bragg gratings, used with an associated 1xN switch (or a plurality of N off/on switches). In this case, an N-fold improvement in bandwidth/resolution can be obtained. When used in association with various other optical input elements (such as, for example, couplers or other pass through elements), any number of different optical signals may be used. In fact, the multiple grating monitor of the present invention may be used to study a variety of different optical signals associated with a given optical system.

Other and further embodiments of the present invention will become apparent during the course of the following discussion and by reference to the accompanying drawings.

## Brief Description Of The Drawings

Referring now to the drawings, where like numerals represent like parts in several views:

FIG. 1 is a top view of a prior art blazed Bragg grating optical tap arrangement;

FIG. 2 is a side view of the prior art arrangement of FIG. 1;

FIG. 3 contains a side view of an exemplary multiple blazed Bragg grating optical tap arrangement formed in accordance with the present invention;

FIG. 4 is a top view of the embodiment of FIG. 3, illustrating in particular the side-by-side disposition of the pair of blazed gratings as used in the present invention;

FIG. 5 illustrates an alternative embodiment of the present invention, incorporating reflective elements in the arrangement;

FIG. 6 is a side view of an embodiment of the present invention include N blazed gratings and an associated 1xN optical switch; and

FIG. 7 is a side view of yet another embodiment of the present invention, where the 1xN optical switch of FIG. 6 has been replaced by a plurality of N on/off switches.

## Detailed Description

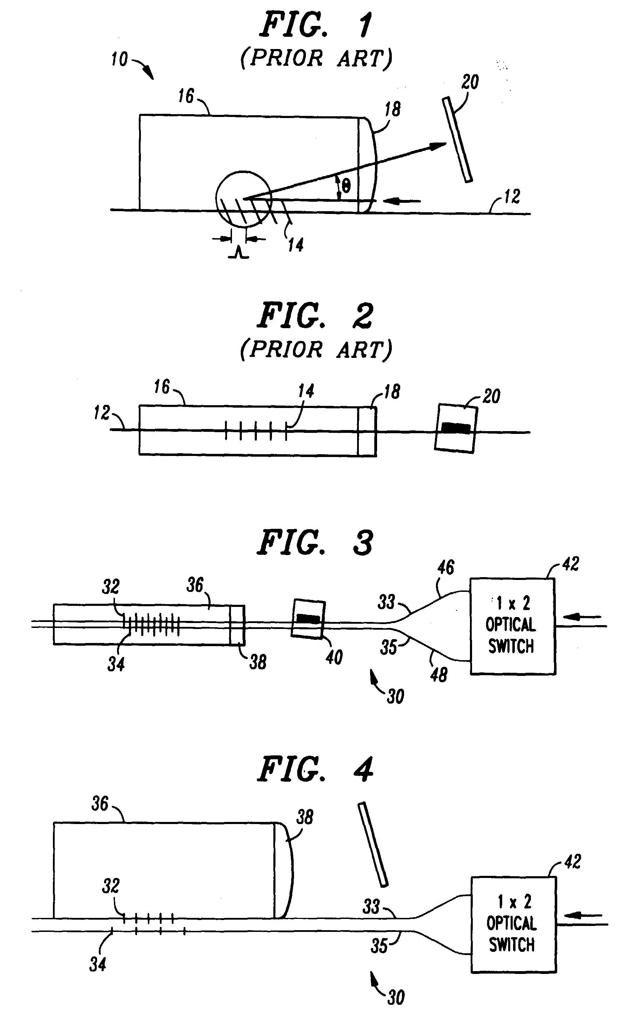

In order to aid in the understanding of the present invention, a conventional, prior art optical tap monitor will be briefly described, where one such arrangement 10 is illustrated in a top view in FIG. 1 and a side view in FIG. 2. An optical waveguide 12 (in this case, an optical fiber - although any optical guiding medium may be used) includes a blazed Bragg grating 14. To simplify the diagrams of FIGs. 1 and 2 (as well as all following illustrations), fiber 12 is illustrated by a single line. It is be understood that in actuality fiber 12 includes a core region (for light guiding) and a surrounding cladding layer, where blazed Bragg grating 14 is formed in the core in conventional fashion. By way of example, the fiber may comprise a conventional silica-base single mode fiber and the grating may be "written" (i.e., photolithographically etched) into tile fiber using a phase mask. The grating period $\Lambda$ and blaze $\theta$ (i.e., tilt

with respect to the optical axis) are chosen to tap (hereinafter referred to as "redirect", where the use of this term is understood as redirecting a portion of the optical signal power, anywhere from 1% to 99%, for example, as desired by the user) optical wavelengths within a desired bandwidth $\Delta\lambda$. Referring back to FIG. 1, an index-matched glass block 16 is disposed adjacent to fiber 12 and includes a lens element 18 for focusing the re-directed light signal onto a detector array 20, where detector array may comprise an array of InGaAs photodiodes. Consequently, the electrical signals of the detector array map out the spectrum of light associated with the input signal. Conventional control electronics (not shown) can then be used to extract and analyze the detector array data. The specific data may then define the optical spectrum and the number of DWDM channels along with their wavelengths, powers, and signal-to-noise ratios (SNRs). As mentioned above, the prior art arrangement as depicted in FIGs. 1 and 2 is limited in terms of the bandwidth and resolution that may be achieved with the particular combination of blazed Bragg grating 14 and photodetector array 20.

The use of multiple blazed gratings, in accordance with the present invention, is considered to overcome these limitations of the prior art. FIG. 3 contains a side view of an exemplary optical monitor 30 formed in accordance with the present invention that utilizes a pair of blazed Bragg gratings 32 and 34 formed in an associated pair of optical fibers (or any other appropriate light guiding material) 33 and 35, respectively, to improve the overall bandwidth and resolution of optical monitor 30. A top view of optical monitor 30, illustrating clearly the side-by-side disposition of blazed Bragg gratings 32 and 34, is shown in FIG. 4. As with the prior art arrangements, gratings 32,34 are bonded to an index-matching glass block 36 including a lensed endface 38. A photodetector array 40 is positioned so as to capture the optical signal redirected ("tapped") by gratings 32,34.

In accordance with an exemplary embodiment of the present invention, first blazed Bragg grating 32 is formed to exhibit a first grating period $\Lambda_1$ and blaze angle $\theta_1$ that will function to redirect a predetermined optical spectrum $\lambda_A$-$\lambda_B$ out of fiber 33 and toward detector array 40. In particular, by controlling the angular displacement, the particular subset of photodiodes within array 40 that are illuminated by spectrum $\lambda_A$-$\lambda_B$ can be similarly controlled. Second blazed Bragg grating 34 is formed, in accordance with this embodiment of the present invention, to exhibit a second, different grating period $\Lambda_2$ and blaze angle $\theta_2$ associated with the redirection of a different spectrum $\lambda_X$ -$\lambda_Y$. The use of different blaze angles and grating periods function to change the spectral band imaged onto the detector array. Referring to FIGs. 3 and 4, a 1x2 optical switch 42 is shown as coupled to fibers 33 and 35, where the state of switch 42 is used to control which grating is "active" at a time, since in this embodiment only one blazed Bragg grating is used at any given time. That is, light entering input port 44 of 1x2 optical switch 42 is directed exclusively to one of the two output ports 46 and 48 of switch 42. Although not shown in the figures, optical switch 42 and photodetector array 40 are controlled by external electronics including a microprocessor for spectral calibration and various related calculations. It is to be understood that the arrangement of the present invention may use "unchirped" or "chirped" blazed gratings, as defined above, or any suitable combination of both "unchirped" and "chirped" blazed gratings.

In general, the advantage of the arrangement of the present invention derives from the ability to control the parameters of gratings 32 and 34. For example, the gratings can be designed such that they tap out light in different wavelength ranges, that is, with no spectral overlap between $\lambda_A$-$\lambda_B$ (denoted as range $R_{AB}$) and $\lambda_X$-$\lambda_Y$ (denoted as range $R_{XY}$). Consequently, switching 1x2 optical switch 42 between output ports 44 and 46 (equivalently, switching between gratings 32 and 34), results in spectra within the wavelength ranges $R_{AB}$ and $R_{XY}$, respectively, being imaged onto detector array 40. Since the bandwidth, denoted B, of monitor 30 is proportional to the focal length $f$, gratings 32,34 and the focusing optics (comprising glass block 36 and lens 38) can be chosen to provide improved performance in a number of different ways. For example, optical monitor 30 can be implemented so as to double the associated resolution of a given bandwidth. That is, using a factor of 2 longer focal length optics, each grating 32,34 can be used to image half of the desired bandwidth, yielding twice as many raw data points over the same wavelength range. Alternatively, the monitor's bandwidth may be doubled (for a given resolution) by implementing non-overlapping bands for each blazed Bragg grating. That is, by maintaining the same focal length optics, each grating 32 and 34 can be used to image distinct full bands onto photodetector array 40, doubling the total wavelength range. It is to be understood that between these two extremes one may incorporate both increased resolution and increased bandwidth.

Blazed Bragg gratings 32,34 may also be chosen such that they increase the total dynamic power range of monitor 30. As is well known in the art, blazed gratings can be fabricated to tap from less then 1% to greater than 99% of the light out of the fiber. Consequently, two gratings of largely different strengths can be used in a device that is controlled to switch between the two depending on the input power level. In particular, for high input powers, the weaker grating would be used and, similarly, for low power input signals, the stronger grating would be employed, ensuring in each instance that a sufficient power optical signal will impinge monitor 40. Advantageously, a significantly wider range of input powers (for example, up to 20 dB or more increase) could be measured with a single monitor 30.

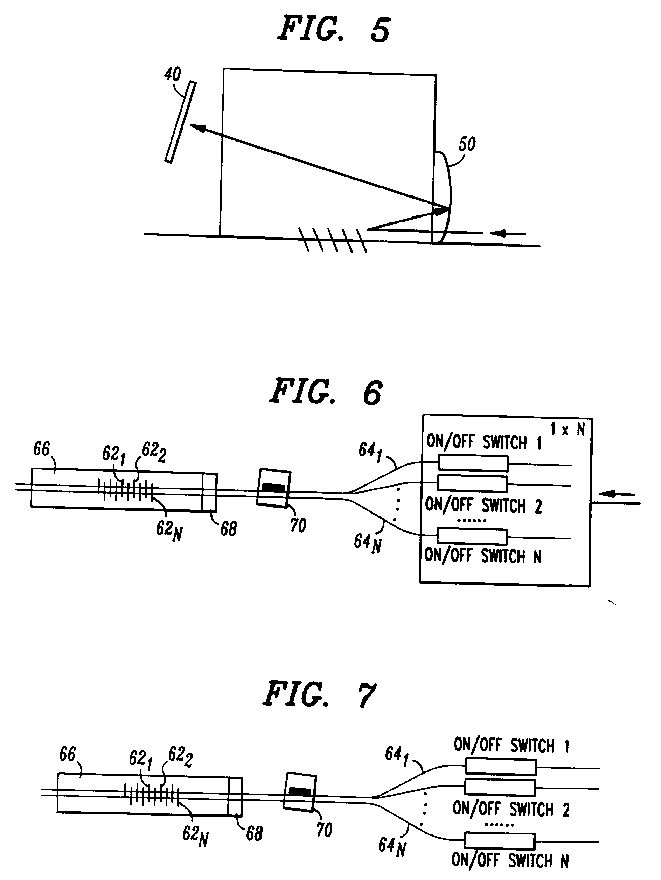

The geometry of monitor 30 is considered to be exemplary only, there are various other arrangements, well-known in the art, that may utilize multiple blazed Bragg gratings in accordance with the teachings of the present invention. In particular, FIG. 5 illustrates a reflective geometry arrangement where lens 38 of FIGs. 3 and 4 is replaced by a concave mirror 50 that will reflect the tapped light back through glass block 36 and into (re-positioned) detector array 40.

As mentioned above, the teachings of the present invention can be extended beyond the use of a pair of blazed Bragg gratings to an arrangement employing a plurality of N blazed Bragg gratings. FIG. 6 contains a side view of an N-element optical monitor 60 including a plurality of N blazed Bragg gratings $62_1$-$62_N$, stacked side-by-side, each grating formed within an associated optical waveguide (for example, optical fiber) $64_1$-$64_N$. The plurality of gratings $62_1$-$62_N$ are disposed adjacent to a glass block 66 and associated lensing element 68 which then function to focus the tapped light onto a photodetector array 70. In this particular embodiment, a 1xN optical switch 72 is used to control the particular grating that is "active" at a given time. Such an arrangement is particularly well-suited for DWDM applications that require the use of multiple, closely-spaced wavelengths.

In an alternative embodiment, 1xN switch 72 can be replaced by a plurality of N on/off switches $74_1$-$74_N$, as shown in FIG. 7. This arrangement is particularly well-suited for monitoring multiple inputs, such as, for example, a plurality of N separate network elements that can be monitored with a single device.

*Example*

We have experimentally demonstrated the multiple grating optical waveguide monitor as depicted in FIGs. 3 and 4. A pair of unchirped fiber blazed Bragg gratings 32 and 34, with center wavelengths of 1547nm and 1575nm, respectively, were used as the dispersive elements. The blaze angles $\theta_1$ and $\theta_2$ were chosen to be equal at a value of 9°, such that the wavelength 1547nm from grating 32 and wavelength 1575nm from grating 34 emanated at the same angle relative to the fiber axes, namely 18°. The gratings were photolithographically written in a conventional single mode silica-based fiber using phase masks. The lengths of the gratings were approximately 10mm. The strengths of the gratings were such that ~20% of the single mode light at the center wavelengths were tapped out of the fibers. To achieve the fiber-to-block coupling, the gratings were bonded to a fused silica glass block (n=1.44 at 1550nm) with an optically transparent, closely index-matching (n=1.56) adhesive. Glass block 36 was nominally 6cm x 3cm x 1cm in dimension. A high-reflective dielectric (R>99%) concave mirror with a focal length of 100mm served to focus the outcoupled light from both gratings 32 and 34 onto a 256 element linear InGaAs detector array (it is to be understood that a two-dimensional array can be used as an alternative). Each detector element was 30μm in width and 250μm long. The array covered a 35nm wide range of wavelengths with each detector element corresponding to a 0.14nm range of light. The inputs of the two gratings were fusion spliced to the outputs of a 1x2 opto-mechanical switch 42. A 5V signal applied to the electrical leads of the switch was used to toggle the switch back and forth between output ports 46 and 48.

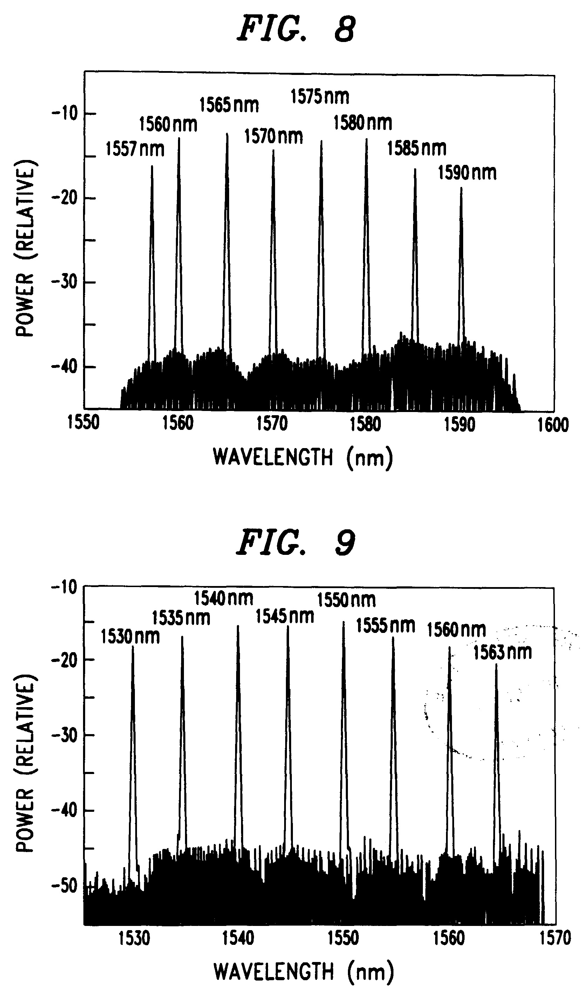

Laser radiation from tunable Hewlett Packard and Photonetics external cavity lasers (ECLs) were multiplexed together and used as inputs to the device. FIG. 8 shows the spectral response of a dual grating monitor designed as described in this Example when there is no voltage applied across the optical switch leads. In this configuration, the light entering the switch is directed to output port 46 and, hence, through grating 32. The corresponding wavelength range incident on detector array 40 is 1556-1591nm. Similarly, FIG. 9 displays the response when a 5V bias is applied across the leads. Here, light is directed to output port 48 and thereafter through grating 34, resulting in a measured spectrum from 1529-1564nm.

It is to be understood that there are many variations to the embodiments as discussed above that are considered to fall within the scope of the present invention. For example, the blazed gratings may comprise fiber gratings, channel or planar waveguide gratings or, in general, any suitable type of light guiding gratings. Geometries other than those illustrated in FIGs. 3 and 5 may be utilized and, moreover, used in combination with any suitable type of lensing arrangement capable of focusing the tapped light onto a detecting device, such as, for example, a spherical lens, cylindrical lens or any appropriate combination of such lenses. Indeed, the detecting device itself may take on any suitable arrangement, including a one-dimensional array of photodiodes, a two-dimensional array, each defined as a single "detecting device", or alternatively, a multiple number of separate, smaller detecting devices, perhaps each device for focusing light from a separate grating in a one-to-one relationship. Alternatively, multiple detectors could be used to study the spectra from different gratings. The multiple grating optical waveguide monitor of the present invention may also be utilized as a bidirectional device, accepting optical input signals from either end of the fiber grating structure.

**Claims**

1. An optical monitor for redirecting a portion of an incoming optical signal into a detecting device, the monitor comprising

  a plurality of N input optical waveguides, each capable of receiving as an input said incoming optical signal for propagating along a defined optical axis;

  a plurality of N blazed Bragg gratings, each formed within a separate one of the plurality of N input optical waveguides and defined as comprising a grating period $\Lambda_i$ and blaze angle $\theta_i$ so as to redirect a predetermined range of optical wavelengths out of the optical axis; and

  an optical detecting arrangement disposed to receive the redirected optical wavelengths captured by said optical lensing arrangement and monitor predetermined characteristics of said input optical signal.

2. An optical monitor as defined in claim 1 wherein the monitor further comprises an optical tensing arrangement for capturing the predetermined range of optical wavelengths redirected by the plurality of N blazed gratings.

3. An optical monitor as defined in claim 1 wherein the plurality of N input optical waveguides comprise a plurality of N optical fibers including an inner core region and outer cladding layer and the plurality of N blazed Bragg gratings are formed in the core region of their associated optical fibers.

4. An optical monitor as defined in claim 3 wherein the plurality of N optical fibers comprise a plurality of N single mode optical fibers.

5. An optical monitor as defined in claim 3 wherein the plurality of N blazed Bragg gratings comprise photolithographically written gratings.

6. An optical monitor as defined in claim 1 wherein each blazed Bragg grating comprises an essentially identical blaze angle $\theta$.

7. An optical monitor as defined in claim 1 wherein at least two blazed Bragg gratings of the plurality of N blazed Bragg gratings comprise different blaze angles $\theta$.

8. An optical monitor as defined in claim 1 wherein at least two Bragg gratings of the plurality of N blazed Bragg gratings comprise a different grating period $\Lambda$.

9. An optical monitor as defined in claim 1 wherein at least one blazed Bragg grating is a chirped grating.

10. An optical monitor as defined in claim 1 wherein each grating in the plurality of N blazed Bragg gratings is a chirped grating.

11. An optical monitor as defined in claim 2 wherein the optical lensing arrangement comprises

an index-matching block disposed to capture the predetermined range of optical wavelengths redirected by the plurality of N blazed Bragg gratings; and

a lens element disposed at the output of the index-matching block to focus said predetermined range of optical wavelengths onto the optical detecting arrangement.

12. An optical monitor as defined in claim 11 wherein the lens element comprises a spherical lens.

13. An optical monitor as defined in claim 11 wherein the lens element comprises a cylindrical lens.

14. An optical monitor as defined in claim 11 wherein the lens element comprises a compound cylindrical-cylindrical lens.

15. An optical monitor as defined in claim 11 wherein the lens element comprises a concave reflector for redirecting the predetermined wavelengths back through the index-matching element and into the optical detecting arrangement.

16. An optical monitor as defined in claim 2 wherein the optical lensing arrangement comprises a plurality of separate lensing elements, for use with a plurality of separate chirped blazed gratings for focusing a plurality of different wavelengths.

17. An optical monitor as defined in claim 1 wherein the optical detecting arrangement comprises an array of photodiode devices.

18. An optical monitor as defined in claim 17 wherein the array of photodiode devices is a linear array.

19. An optical monitor as defined in claim 17 wherein the array of photodiode devices is a two dimensional array.

20. An optical monitor as defined in claim 17 wherein the photodetecting arrangement comprises a single photodetecting device capable of being moved to the location required to capture the tapped wavelengths.

21. An optical monitor as defined in claim 1 wherein the monitor further comprises a 1xN optical switch including a single input port for receiving the incoming optical signal and a plurality of N output ports, each output port coupled to a separate one of the plurality of N optical waveguides, wherein the switching between output ports is controlled to determine which grating of the plurality of N blazed Bragg gratings will be used with the incoming optical signal.

22. An optical monitor as defined in claim 1 wherein the monitor further comprises a plurality of N on/off switches, each on/off switch coupled to a separate one of the plurality of N optical waveguides and controlled to determine which grating of the plurality of N blazed Bragg gratings will be used with the incoming optical signal.

23. An optical monitor as defined in claim 1 wherein the plurality of N optical waveguides comprises a pair of optical waveguides and the plurality of N blazed Bragg gratings comprises a pair of blazed Bragg gratings.

24. An optical monitor for redirecting a portion of a plurality of M incoming optical signals into a detecting device, the monitor comprising

a plurality of N input optical waveguides, each capable of receiving as an input one or more of said plurality of M incoming optical signals for propagating along a defined optical axis;

an optical coupling arrangement for providing the plurality of M optical input signals as inputs to one or more of the plurality of N input optical waveguides;

a plurality of N blazed Bragg gratings, each formed within a separate one of the plurality of N input optical waveguides and defined as comprising a grating period $\Lambda_i$ and blaze angle $\theta_i$ so as to redirect a predetermined range of optical wavelengths out of the optical axis; and

an optical detecting arrangement disposed to receive the redirected optical wavelengths captured by said optical lensing arrangement and monitor predetermined characteristics of said input optical signal.

25. An optical monitor as defined in claim 24 wherein the monitor further comprises

an optical lensing arrangement for capturing the predetermine range of optical wavelengths redirected by the plurality of N blazed gratings.

26. An optical monitor as defined in claim 24 wherein the plurality of N input optical waveguides comprise a plurality of N optical fibers including an inner core region and outer cladding layer and the plurality of N blazed Bragg gratings are formed in the core region of their associated optical fibers.

27. An optical monitor as defined in claim 26 wherein the plurality of N optical fibers comprise a plurality of N single mode optical fibers.

28. An optical monitor as defined in claim 26 wherein the plurality of N blazed Bragg gratings comprise photolithographically written gratings.

29. An optical monitor as defined in claim 24 wherein each blazed Bragg grating comprises an essentially identical blaze angle $\theta$.

30. An optical monitor as defined in claim 24 wherein at least two blazed Bragg gratings of the plurality of N blazed Bragg gratings comprise different blaze angles $\theta$.

31. An optical monitor as defined in claim 24 wherein at least two Bragg gratings of the plurality of N blazed Bragg gratings comprise a different grating period $\Lambda$.

32. An optical monitor as defined in claim 24 wherein at least on blazed Bragg grating is a chirped grating.

33. An optical monitor as defined in claim 24 wherein each grating in the plurality of N blazed Bragg gratings is a chirped grating.

34. An optical monitor as defined in claim 24 wherein the optical coupling arrangement comprises an MxN coupler for providing the plurality of M incoming optical signals as inputs to the plurality of N input optical waveguides.

35. An optical monitor as defined in claim 24 wherein the optical coupling arrangement comprises a 1xN optical switch including a single input port for receiving one of the plurality of M input optical signals and a plurality of N output ports, each output port coupled to a separate one of the plurality of N optical waveguides.

36. An optical monitor as defined in claim 24 wherein the optical coupling arrangement comprises a plurality of N on/off switches, each on/off switch coupled to a separate one of the plurality of N optical waveguides and controlled to determine which grating of the plurality of N blazed gratings will be used with one input signal of the plurality of M input optical signals.

37. An optical monitor as defined in claim 24 wherein the optical coupling arrangement comprises a plurality of N pass through ports, each coupled to a separate one of the plurality of N optical waveguides for providing as an input a selected one of the plurality of M input optical signals.

38. An optical monitor as defined in claim 24 wherein the optical coupling arrangement comprises a plurality of elements chosen from the group consisting of: on/off switches, optical matrix switches, optical couplers, and pass through ports for directing one or more of the plurality of M input optical signals into one or more of plurality of N optical waveguides.

39. An optical monitor as defined in claim 25 wherein the optical lensing arrangement comprises

an index-matching block disposed to capture the predetermined range of optical wavelengths redirected by the plurality of N blazed Bragg gratings; and

a lens element disposed at the output of the index-matching block to focus said predetermined range of optical wavelengths onto the optical detecting arrangement.

40. An optical monitor as defined claim 39 wherein the lens element comprises a spherical lens.

41. An optical monitor as defined in claim 39 wherein the lens element comprises a cylindrical lens.

42. An optical monitor as defined in claim 39 wherein the lens clement comprises a compound cylindrical-cylindrical lens.

43. An optical monitor as defined in claim 39 wherein the lens element comprises a concave reflector for redirecting the predetermined wavelengths back through the index-matching element and into the optical detecting arrangement.

44. An optical monitor as defined in claim 25 wherein the lensing arrangement comprises a plurality of separate lensing elements, for use with a plurality of separate blazed gratings.

45. An optical monitor as defined in claim 25 wherein the optical detecting arrangement comprises an array of photodiode devices.

46. An optical monitor as defined in claim 45 wherein the array of photodiode devices is a linear array.

47. An optical monitor as defined in claim 45 wherein the array of photodiode devices is a two dimensional array.

48. An optical monitor as defined in claim 45 wherein the photodetecting arrangement comprises a single photodetecting device capable of being moved to the location required to capture the tapped wavelengths.

**49.** An optical monitor as defined in claim 25 wherein the monitor functions in a bidirectional configuration so as to allow for input optical signals to propagate in either direction through the plurality of N blazed Bragg gratings.

## FIG. 1
### (PRIOR ART)

## FIG. 2
### (PRIOR ART)

## FIG. 3

1 x 2
OPTICAL
SWITCH

## FIG. 4

1 x 2
OPTICAL
SWITCH

## FIG. 5

## FIG. 6

## FIG. 7

## FIG. 8

## FIG. 9

**European Patent Office**

## EUROPEAN SEARCH REPORT

Application Number

EP 00 30 9053

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | EP 0 435 201 A (UNITED TECHNOLOGIE) 3 July 1991 (1991-07-03) * abstract; figures 1-5 * | 1,24 | G02B6/34 G02B6/16 |
| D,A | EP 0 840 150 A (LUCENT TECHNOLOGIE) 6 May 1998 (1998-05-06) * abstract; figures 1-11 * | 1,24 | |

TECHNICAL FIELDS SEARCHED (Int.Cl.7)

G02B

The present search report has been drawn up for all claims

| Place of search | Date of completion of the search | Examiner |
|---|---|---|
| THE HAGUE | 5 February 2001 | Malic, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

ANNEX TO THE EUROPEAN SEARCH REPORT
ON EUROPEAN PATENT APPLICATION NO.

EP 00 30 9053

This annex lists the patent family membersrelating to the patent documents cited in the above-mentioned European search report.
The members are as contained in the European Patent Office EDP file on
The European Patent Office is in no way liable for these particulars which are merely given for the purpose of information.

05-02-2001

| Patent document cited in search report | | Publication date | Patent family member(s) | | Publication date |
|---|---|---|---|---|---|
| EP 0435201 | A | 03-07-1991 | US | 5061032 A | 29-10-1991 |
| | | | DE | 69031707 D | 18-12-1997 |
| | | | DE | 69031707 T | 12-03-1998 |
| | | | JP | 2647747 B | 27-08-1997 |
| | | | JP | 4298703 A | 22-10-1992 |
| EP 0840150 | A | 06-05-1998 | US | 5832156 A | 03-11-1998 |
| | | | JP | 10133054 A | 22-05-1998 |
| | | | US | 6002822 A | 14-12-1999 |
| | | | US | 5850302 A | 15-12-1998 |

EPO FORM P0459

For more details about this annex : see Official Journal of the European Patent Office, No. 12/82